# EUROPEAN PATENT APPLICATION

(11) **EP 4 697 434 A1**
(43) Date of publication of application: **18.02.2026**
(21) Application number: 24788513.0
(22) Date of filing: 15.03.2024
(51) Int. Cl.: H01M 10/0587, H01M 4/66, H01M 10/052

(54) **NONAQUEOUS ELECTROLYTE SECONDARY BATTERY**

(30) Priority: 10.04.2023 JP 2023063619
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP)
(74) Representative: Novagraaf International SA
(86) International application number: PCT/JP2024/010297
(87) International publication number: WO 2024/214483

(57) **Abstract**

A nonaqueous electrolyte secondary battery includes: an electrode group of wound type including a positive electrode, a negative electrode, and a separator provided between the positive electrode and the negative electrode; and a nonaqueous electrolyte. The electrode group includes a core portion for winding. The core portion includes a film piece and a winding start end region of the separator. The film piece and the winding start end region are wound in an overlapped manner.

## Description

### [Cross Reference to Related Applications]

The present disclosure is based on and claims priority under 35 U.S.C. §119 to Japanese Patent Application No. 2023-063619, filed on April 10, 2023, of which entire content is incorporated herein by reference into the present application.

### [Technical Field]

The present disclosure relates to a nonaqueous electrolyte secondary battery.

### [Background Art]

Patent Literature 1 proposes "a cylindrical lithium ion battery in which a wound group is formed by winding a positive electrode plate and a negative electrode plate around a axial core with separators therebetween, and the wound group is housed in a cylindrical battery container, characterized in that two sets of separators, each consisting of two sheets, between the positive electrode plate and the negative electrode plate are used in the wound group, the leading ends of each set of the separators are integrated by welding, and the integrated leading ends are bonded to different positions of the axial core.

### [Citation List]

### [Patent Literature]

[Patent Literature 1] Japanese Laid-Open Patent Publication No. 2001-229970

### [Summary of Invention]

### [Technical Problem]

In Patent Literature 1, a hollow cylindrical member is used as the "axial core". However, when the leading ends of the separators (i.e., the tip ends of the winding start end regions) are fixed to the hollow cylindrical member, the contact pressure of the entire electrode group significantly increases in charging and discharging. This may damage the electrode group, leading to deterioration of the battery performance.

### [Solution to Problem]

One aspect of the present disclosure relates to a nonaqueous electrolyte secondary battery including: an electrode group of wound type including a positive electrode, a negative electrode, and a separator provided between the positive electrode and the negative electrode; and a nonaqueous electrolyte, wherein the electrode group includes a core portion for winding, the core portion includes a film piece and a winding start end region of the separator, the film piece and the winding start end region are wound in an overlapped manner, and an innermost peripheral part of the core portion is closed by a folded portion formed of the film piece and the winding start end region, overlapped with each other, folded in two.

### [Advantageous Effects of Invention]

According to the present disclosure, performance degradation of a nonaqueous electrolyte secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic diagram of an example of the positional relationship between a winding core and a film piece, a separator, and electrodes which are to be wound.
[FIG. 2] FIG. 2 is a schematic cross-sectional view, perpendicular to the axial direction, of an example of a core portion of the electrode group.
[FIG. 3] FIG. 3 is a schematic cross-sectional view, perpendicular to the axial direction, of an example of the electrode group.
[FIG. 4] FIG. 4 is a schematic longitudinal cross-sectional view of an example of a nonaqueous electrolyte secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

The present disclosure relates to a nonaqueous electrolyte secondary battery and generally encompasses batteries including a nonaqueous electrolyte. The nonaqueous electrolyte may have lithium-ion ionic conductivity, for example. The nonaqueous electrolyte secondary battery may be a lithium-ion secondary battery, a lithium-metal secondary battery, a solid electrolyte secondary battery, or an all-solid-state battery, for example.

Note that the lithium-metal secondary battery is also simply referred to as a "lithium secondary battery". In the negative electrode of a lithium secondary, lithium metal deposits during charging, and the lithium metal dissolves during discharging. Specifically, the negative electrode includes at least a negative electrode current collector, and the lithium metal deposits on the negative electrode current collector.

A nonaqueous electrolyte secondary battery (hereinafter referred to as "secondary battery (A)") according to an embodiment of the present disclosure includes an electrode group of wound type including a positive electrode, a negative electrode, and a separator provided between the positive electrode and the negative electrode, and a nonaqueous electrolyte. The outer shape of the electrode group is, for example, columnar, and the outer shape of the electrode group in cross section may be, for example, circular or elliptical.

The electrode group includes a core portion for winding. The core portion includes a film piece and a winding start end region of the separator, and the film piece and the winding start end region are wound in an overlapped manner. Hereinafter, the core portion such as above is also referred to as "core portion (B)".

The core portion (B), which is a wound body of the film piece and the separator, is flexible and capable of contracting and deforming. Accordingly, the core portion (B) has a function of relieving the contact pressure in the entire electrode group when the contact pressure greatly increases during charging and discharging. In other words, damage of the electrode group or deterioration of the battery performance is suppressed.

The "contact pressure" is the pressure applied in the radial direction of the electrode group by the core portion (B) pressing the inner peripheral surface of the electrode group and is also referred to as "internal pressure" of the electrode group. The outer peripheral surface of the electrode group is usually pressed, for example, by a battery can housing the electrode group.

Even if a core portion corresponding to the core portion (B) is formed by winding only the film piece or only the winding start end region of the separator, the electrode group may be damaged by local pressure due to the presence of the winding start ends of the electrodes, leading to deterioration of the battery performance. It is considered that a core portion formed by winding only the film piece or only the separator is likely to deform nonuniformly in relieving the contact pressure or the internal pressure. Nonuniform deformation of the core portion serves as a cause of the damage due to deformation of the electrode group. By contrast, the core portion (B) formed by winding the film piece and the separator in an overlapped manner is likely to contract while distributing the stress to the entire core portion and is less likely to deform nonuniformly.

Preferably, the film piece is not interposed between the positive electrode and the negative electrode. However, the winding terminal end of the film piece may be located on the outer peripheral side of the winding start end of the positive electrode or the negative electrode. In this case, the length of the part of the film piece located on the outer peripheral side of the winding start end of the positive electrode or the negative electrode is preferably 40% or less of the entire length of the electrode, and more preferably 10% or less.

The core portion (B) may be formed, for example, by winding the film piece and the separator multiple times around a folded portion or a folded crease, which serves as a center and is formed by folding the film piece and the separator in two in an overlapped manner. In folding the film piece and the separator in two in an overlapped manner, the film piece may be folded such that the film piece is wrapped with the winding start end region of the separator (i.e., such that the film piece is on the inside and the separator is on the outside), or such that the winding start end region of the separator is wrapped with the film piece (i.e., such that the separator is on the inside and the film piece is on the outside).

As a result of folding in two, the folded portion or the folded crease, at which the film piece and the winding start end region of the separator are folded together and closed, is formed as a leading end, and the separator folded in two is led out of the core portion (B). The separator folded in two wraps the respective winding start ends of the positive electrode and the negative electrode. Then, the winding of the separator and the positive and negative electrodes is continued, thereby forming the electrode group.

The innermost peripheral part of the core portion (B) is closed by the folded portion formed when the film piece and the winding start end region, overlapped with each other, are folded in two. In other words, the innermost peripheral part is formed of the folded portion and does not have an end in the longitudinal direction in cross section of the film piece or the separator. When the innermost peripheral part of the core portion (B) is formed of the folded portion, resistance to contraction or deformation of the innermost peripheral part is very small. If the innermost peripheral part has an end in the longitudinal direction in cross section of the separator or the film piece, the edge of such an end can engage with a member located on the outer peripheral side. This makes it difficult for the core portion (B) to smoothly contract and deform at a low resistance.

In the core portion (B), the film piece is wound together with the winding start end region one turn or more and ten turns or less in a state in which the film piece forms two overlapping layers. In the above configuration, further high strength can be maintained in the core portion (B) and it is likely that high elasticity and flexibility are ensured in the core portion (B). Note that the number of layers of the film piece in the core portion (B) is the maximum number of layers in the core portion (B).

The larger the number of turns of the film piece and the winding start end region of the separator, the larger the largest diameter of the core portion (B). The largest diameter of the core portion (B) may be, for example, 0.5 mm or more and 6 mm or less, may be 1.5 mm or more and 6 mm or less, or may be 2 mm or more and 5 mm or less. The core portion (B) may be selected according to the diameter of the electrode group.

The largest diameter of the core portion (B) is determined from an X-ray CT image of a cross section of the discharged secondary battery (A) (cross section perpendicular to the winding axis of the electrode group) at the initial stage of discharging. The largest diameter of the innermost periphery of the negative electrode that can be observed in the CT image, that is, the largest diameter of the contour of the outer shape of the core portion (B) in the cross section is determined. The end of the core portion (B) may match or may not match the winding terminal end of the film piece at its outermost periphery.

The largest diameter of the core portion is measured for the discharged secondary battery (A) at the initial stage of charging and discharging. The term "discharged " refers to a stage when the depth of discharge (DOD) is 90% or more. The depth of discharge (DOD) being 90% or more refers to the state in which an electric quantity equivalent to 90% or more of the rated capacity of the battery has been discharged. The term "initial stage of charging and discharging" refers to the stages of the battery after the initial charging and discharging, immediately after the purchase, and after charging and discharging are performed for one cycle to several cycles after the purchase.

Hereinafter, embodiments of the battery according to the present disclosure will be further described with reference to the drawings from time to time. In the drawings, the shapes or features of the elements do not necessarily reflect actual dimensions and are not necessarily drawn to scale. In the drawings, the same reference numerals are used for the same elements.

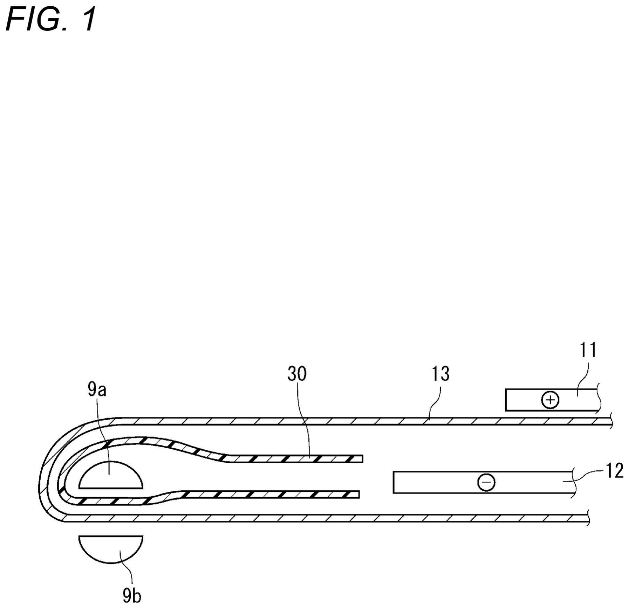

The winding is performed using, for example, a pair of rod-shaped bodies as a winding core. FIG. 1 illustrates an example of the positional relationship between a winding core and a film piece, a separator, and electrodes which are to be wound. The rod-shaped bodies 9a and 9b each have a shape, in cross section perpendicular to the longitudinal direction, defined by an arc and a chord and is typically semi-circular. First, the film piece 30 and the separator 13, overlapped with each other, are wound around the peripheral surface of a first rod-shaped body 9a. Then, the film piece 30 and the separator 13, overlapped with each other, are sandwiched between a flat surface corresponding to the chord of the first rod-shaped body 9a to which the film piece 30 and the separator 13 are wound and a flat surface corresponding to the chord of the other (second) rod-shaped body 9b. Then, the film piece 30 and the separator 13, overlapped with each other, are wound together using the pair of rod-shaped bodies 9a and 9b. In the multiple-time winding, the entirety of the film piece 30 is used for forming the core portion (B). The separator folded in two is led out of the core portion (B). The separator folded in two then sequentially wraps the winding start ends of the negative electrode 12 and the positive electrode 11. Then, the winding of the separator, the positive electrode, and the negative electrode is continued. When the winding is completed, the winding core is pulled out.

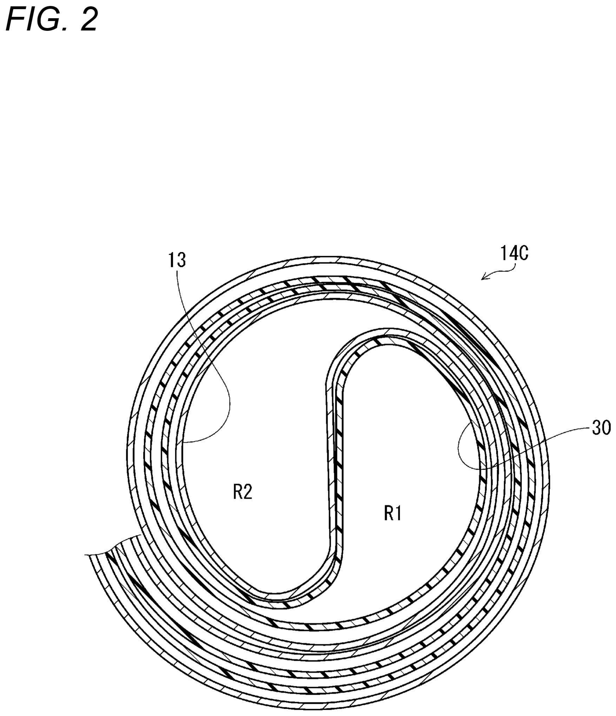

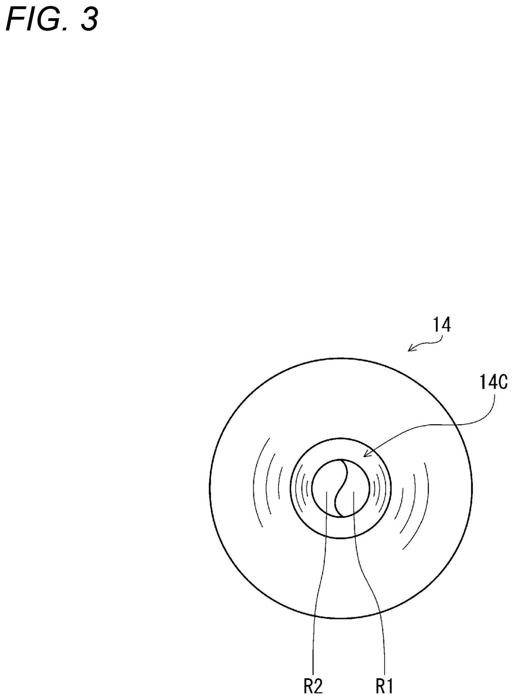

When the winding is performed in the manner described above (which is not intended to be limiting), a first space can be formed inside the innermost periphery of the core portion (B) in the electrode group. FIG. 2 is a schematic cross-sectional view, perpendicular to the axial direction, of an example of the core portion (B) 14c of an electrode group 14. FIG. 3 is a schematic cross-sectional view, perpendicular to the axial direction, of an example of the electrode group 14. A first space R1 is derived from the space having been occupied by the first rod-shaped body 9a and is formed when the first rod-shaped body 9a is pulled out. A second space R2 can be present adjacent to the first space R1 with parts of the film piece 30 and the winding start end region of the separator 13 therebetween. The second space R2 is derived from the space having been occupied by the second rod-shaped body 9b and is formed when the second rod-shaped body 9b is pulled out. It can be said that the first space R1 is a space surrounded by the leading end of the winding which is closed.

One of the first space R1 and the second space R2 is surrounded by the film piece 30, while the other of the first space R1 and the second space R2 is surrounded by the winding start end region of the separator 13. When the film piece 30 and the separator 13 are folded such that film piece 30 is wrapped with the separator 13 in folding the overlapped film piece 30 and separator 13 in two, the first space R1 surrounded by the film piece 30 and the second space R2 surrounded by the winding start end region of the separator 13 are formed. Conversely, when the film piece 30 and the separator 13 are folded such that the separator 13 is wrapped with the film piece 30, the first space R1 surrounded by the winding start end region of the separator 13 and the second space R2 surrounded by the film piece 30 are formed.

The shape of the core portion (B) should be selected according to the shape of the electrode group. When the cross-sectional profile of the electrode group is circular, the cross-sectional profile of the core portion (B) may be circular. When the cross-sectional profile of the electrode group is elliptical, the cross-sectional profile of the core portion (B) may be elliptical.

The material of the film piece is not particularly limited, but a resin film or a metal foil can be used, for example. Among these, a resin film is preferable in terms of excellent flexibility.

The resin film is a film containing a resin or an organic substance as a main component, and 51% by mass or more of the resin film is formed of the resin or the organic substance. The resin film may be formed of, for example, an insulating resin, and may contain a filler dispersed in the insulating resin. As the filler, inorganic particles, an inorganic filler, organic particles or, an organic filler can be used, for example. The resin film may be an oriented film, a non-porous film (film with no pores), or a film having a plurality of regularly arranged pores.

No particular limitations are placed on the resin material forming the resin film. Examples thereof include polyester resins, olefin resins, polyphenylene sulfide resins, acrylic resins, polycarbonate resins, polyether ether ketone resins, polyether sulfone resins, polyamide resins, polyimide resins, nylon resins, polyvinylidene chloride resins, polyvinylidene fluoride resins, ethylene-vinyl alcohol copolymers, polyvinyl alcohol resins, polystyrene resins, urethane resins, and epoxy resins. One resin may be used alone, or two or more resins may be used in combination.

A preferable polyester resin is an aromatic polyester, and polyethylene terephthalate, polybutylene terephthalate, or polyethylene naphthalate is preferable, for example. A film containing, for example, polyethylene terephthalate may be a non-oriented film or a biaxially oriented film.

Examples of the acrylic resin include polymethyl methacrylate.

A preferable polyimide resin is an aromatic polyimide.

A preferable polyamide resin is an aromatic polyamide (aramid resin).

A preferable olefin resin is polypropylene or polyethylene, for example. Examples of the polypropylene include non-oriented polypropylene and biaxially-oriented polypropylene. Examples of the polyethylene include low-density polyethylene, medium-density polyethylene, high-density polyethylene, linear low-density polyethylene, and metallocene polyethylene. Alternatively, the olefin resin may be an ethylene-vinyl acetate copolymer, an ethylene-methyl acrylate copolymer, an ethylene-ethyl acrylate copolymer, an ethylene-methyl methacrylate copolymer, an ethylene-acrylic acid copolymer, an ethylene-methacrylic acid copolymer, or an ionomer resin (e.g., an ethylene-acrylic acid copolymer or an ethylene-methacrylic acid copolymer), for example.

Examples of a method for producing the resin film include extrusion molding methods, of which examples include a T-die method and an inflation method. The oriented film may be a uniaxially-oriented film or a sequential (or simultaneous) biaxially oriented film. The resin film may be formed by laminating two or more types of resin films. The resin may be in a crystalline state, an amorphous state resulting from rapid cooling or the like, or a mixed state of these. The surface of the resin film may be corona-treated or plasma-treated.

The metal material forming the metal foil is not particularly limited and may contain one metal or may be an alloy containing two or more metals. Examples of the metal material include aluminum, magnesium, titanium, copper, iron, stainless steel, carbon steel, nickel, duralumin, white copper, bronze, and brass. Among these, stainless steel is preferable in terms of strength and durability, and austenitic stainless steel in which embrittlement is suppressed is particularly preferable.

When the balance among, for example, strength, elasticity, and flexibility is taken into account, the thickness of the resin film is preferably 0.005 mm or more and 0.1 mm or less, preferably 0.01 mm or more and 0.06 mm or less, and may be 0.02 mm or more and 0.05 mm or less.

The thickness of the metal foil is not particularly limited but is more preferably 0.01 mm or more and 0.2 mm or less when the balance among, for example, strength, elasticity, and flexibility is taken into account, and may be 0.05 mm or more and 0.15 m or less.

The tensile strength in the MD direction of the film piece is, for example, 10 MPa or more and 400 MPa or less, preferably 100 MPa or more and 300 MPa or less, and may be 140 MPa or more and 250 MPa or less.

The elongation of the film piece is, for example, 3%, preferably 5% or more, may be 30% or more, or may be 70% or more. When the balance between elasticity and flexibility is taken into account, the elongation is preferably 500% or less and may be 300% or less.

Tensile strength and elongation of the film pieces are determined in accordance with JIS K 7161(2014) in the case of a resin film, and in accordance with JIS Z 2241(2022) in the case of a metal foil.

The secondary battery (A) may include an outer can that houses the electrode group and the nonaqueous electrolyte. The outer can is a metal-made case, also referred to as battery can. The material of the outer can is required to have excellent strength and durability. The material of the outer can is not particularly limited but may be a metal. Among all, nickel-plated steel or stainless steel is desirable in terms of strength and durability. The shape of the outer can is, for example, a bottomed cylindrical (e.g., cylindrical, flat cylindrical, or angular cylindrical). A sealing body is placed at the opening of the outer to seal the battery.

The inner peripheral surface of the outer can faces the outer peripheral surface of electrode group. As a result of the outer can being present, the shape of the electrode group can be further stabilized and buckling of the electrodes (particularly, the electrode located on the outer peripheral side of the electrode group) is likely to be suppressed. The inner diameter of the outer can may correspond to the size at which the outer peripheral surface of the electrode group contacts the inner peripheral surface of the outer can in the lithium-ion secondary battery in a discharged state after the initial charging and discharging.

The core portion (B) exhibits excellent performance particularly in a lithium (metal) secondary battery which is the secondary battery (A) in which the contact pressure significantly increases during charging. In the negative electrode of the lithium secondary battery, lithium metal deposits during charging, and the lithium metal dissolves during discharging. Therefore, the change in volume of the negative electrode is large, and the change in the contact pressure inside the electrode group is very large.

In a lithium secondary battery, for example, 70% or more of the rated capacity is exhibited by deposition and dissolution of lithium. Electron transfer in the negative electrode during charging and discharging is mainly due to deposition and dissolution of lithium metal in the negative electrode. Specifically, transfer of 70 to 100% (e.g., 80 to 100% or 90 to 100%) of electrons (in another aspect, current) in the negative electrode during charging and discharging is due to deposition and dissolution of lithium metal.

In a battery in which lithium metal deposits in the negative electrode during charging, the open circuit potential (OCP) of the negative electrode in the fully charged state (e.g., SOC of 98% or more) may be, for example, 70 mV or less relative to the lithium metal (dissolution and deposition potential of lithium). The open circuit potential (OCP) of the negative electrode in the fully charged state should be measured after the negative electrode is taken out of a fully charged battery in an argon atmosphere and assembled into a cell with lithium metal as a counter electrode. The nonaqueous electrolyte of the cell may be the same as the nonaqueous electrolyte in the disassembled battery.

The present disclosure will be described further in detail below by exemplifying a lithium (metal) secondary battery.

### [Negative Electrode]

The negative electrode of the lithium secondary battery includes at least a negative electrode current collector that carries lithium metal that deposits during charging. The thickness of the negative electrode current collector is not particularly limited, and is, for example, 5 µm or more and 300 µm or less. The negative electrode current collector may include a metal foil or a resin sheet, for example.

The metal material forming the metal foil may be, for example, Cu, Ni, Fe, or an alloy containing any of these metal elements. Examples of the alloy include Cu alloys and Fe alloys (e.g., stainless steel). The metal foil may be a stainless steel foil, a copper foil (especially an oxygen-free copper foil), or a copper alloy foil, for example. The oxygen-free copper foil is a copper foil having a low oxygen content.

The stainless steel foil is preferably an austenitic stainless steel foil. Austenitic stainless steel foils are less likely to embrittle, have appropriate strength and flexibility, and are excellent in resistance to stresses caused in the negative electrode. The austenitic stainless steel is a stainless steel having an austenite rate of 50% or more. The austenite rate may be 70% or more, 90% or more, or 100%.

The austenite rate means the proportion (mass ratio) of the austenite phase in stainless steel. Given x, y, and z represent the contents of the austenite phase, the ferrite phase, and the martensite phase in stainless steel, respectively, the austenite rate is calculated by the formula {x/(x + y + z)} × 100. The austenitic structure is a face-centered cubic lattice structure (FCC structure), and the ferritic structure and the martensitic structure are body-centered cubic lattice structures (BCC structures).

The oxygen-free copper foil is, for example, a copper foil having an oxygen content of 50 ppm or less. Since the oxygen-free copper foil has a low oxygen content, it is less likely to embrittle. The oxygen content of the oxygen-free copper foil may be 30 ppm or less or 15 ppm or less. The oxygen content means the oxygen content in the base material except the oxide film covering the surface of the copper foil.

The oxygen-free copper foil may contain a trace amount of a component other than copper (e.g., Ni, Cr, Fe, Zn, Sn, Ag, Pb, Bi, Cd, Hg, O, P, S, Se, Te, or H). The content of Cu in the copper foil may be 99.9% by mass or more, or 99.96% by mass or more. The copper foil may be a rolled copper foil. An example of oxygen-free copper is C1020 copper specified in JIS H 3100.

The oxygen content in the copper foil is measured after the oxide film on the surface of a sample copper foil is removed by washing with nitric acid (1 + 1) for 10 seconds. The washing is repeated until the sample is reduced by 10% by mass or more. Next, the sample is washed with distilled water, alcohol, and then acetone in the stated order. Next, the sample is subjected to hot air drying. Immediately thereafter, the sample is analyzed by an inert gas melting-infrared absorption method to determine the oxygen content in the sample. As the analyzer, an oxygen-nitrogen simultaneous analyzer (TC-336, manufactured by LECO Corporation) can be used.

A negative electrode current collector including the resin sheet may include a base metal layer covering the surface of the resin sheet. The base metal layer should cover, for example, 90% or more of the surface of the resin sheet.

The base metal layer preferably contains copper, nickel, chromium, stainless steel, titanium, silver, gold, or tin, for example. In this case, corrosion resistance, conductivity, and the like of the base metal layer can be easily ensured, and the base metal layer is less likely to be alloyed with lithium.

The resin sheet is a sheet containing a resin or an organic substance as a main component, and 51% by mass or more of the resin sheet is formed of the resin or the organic substance. The resin film may be formed of, for example, an insulating resin and may contain a filler dispersed in the insulating resin. As the filler, inorganic particles, an inorganic filler, organic particles, or an organic filler can be used, for example. The resin sheet may be an oriented sheet, a non-porous sheet (a sheet with no pores), or a sheet having a plurality of regularly arranged pores.

The resin contained in the resin sheet is not particularly limited, and a resin that can be used for the resin film described above may be used, for example. For the purpose of improving adhesion, the surface of the resin sheet may be corona-treated or plasma-treated.

The resin sheet may contain a nitrogen-containing resin in at least the surface layer portion thereof. At least 90% by mass of the surface layer portion may be the nitrogen-containing resin. The content of nitrogen atoms in the nitrogen-containing resin may be 3% by mass or more. Accordingly, the content of nitrogen atoms contained in the surface layer portion may be 2.5% by mass or more.

When the base metal layer contains a transition metal, the transition metal has an embrittling effect on the resin sheet. In particular, when a transition metal layer contains copper, embrittlement of the resin sheet tends to occur. It has also been found that lithium metal deposited on the negative electrode current collector significantly accelerates resin sheet embrittlement (e.g., copper damage) by the transition metal. That is, deterioration of the resin sheet due to the presence of the transition metal layer may occur prominently in the lithium secondary battery. To address this, the embrittlement of the resin sheet is remarkably suppressed by at least the surface layer portion of the resin sheet containing a nitrogen-containing resin.

The nitrogen-containing resin may be a polymer having a nitrogen atom in the main chain or a side chain. The nitrogen-containing resin may have at least a nitrogen-hydrogen bond (N-H bond). The presence or absence of the nitrogen-hydrogen bond can be determined by infrared absorption spectrometry. Infrared absorption peaks characteristic of the nitrogen-hydrogen bond are present around 1655 cm⁻¹ (1640 to 1670 cm⁻¹), and around 1530 cm⁻¹ (1515 to 1545 cm⁻¹), for example.

The nitrogen-containing resin may be a polymer having at least one selected from the group consisting of urea bonds, melamine structures, triazine rings, amino groups, amide bonds, aramid bonds, imide bonds, urethane bonds, carbodiimide bonds, uretodione structures, isocyanurate rings, nitrile groups, and amide groups. Examples of such polymers can include polyurethane resins, polyurea resins, melamine resins, polyamide resins, aramid resins, and polyimide resins. Among these, a polyurethane resin is excellent as the material of the current collector due to its high flexibility, high resistance to stress during expansion and contradiction of the electrode, and high resistance to breakage.

A lithium metal layer or a lithium alloy layer (hereinafter, also referred to as lithium underlayer) may be formed on the surface of the negative electrode current collector in advance.

Besides lithium, the lithium alloy may contain an element such as aluminum, magnesium, indium, or zinc. Deposition of the lithium metal on the preformed lithium underlayer during charging can further effectively suppress dendritic deposition. The thickness of the lithium underlayer is not particularly limited, but may be, for example, in the range of 5 µm to 25 µm.

The negative electrode may include a lithium ion absorbance layer (a layer that exhibits a capacity through absorption and release of lithium ions by a negative electrode active material (e.g., graphite)) carried on the negative electrode current collector. In this case, the open circuit potential of the negative electrode in the fully charged state may be 70 mV or less relative to the lithium metal (the dissolution and deposition potential of lithium). When the open circuit potential of the negative electrode in the fully charged state is 70 mV or less relative to the lithium metal, the lithium metal is present on the surface of the lithium ion absorbance layer in the fully charged state. That is, the negative electrode exhibits a capacity by deposition and dissolution of the lithium metal.

The lithium ion absorbance layer is formed by forming a negative electrode mixture containing a negative electrode active material into a layer shape. The negative electrode mixture may contain a binder, a thickener, and a conductive agent, for example, in addition to the negative electrode active material.

Examples of the negative electrode active material include carbonaceous materials, Si-containing materials, and Sn-containing materials. The negative electrode may contain one negative electrode active material or may contain two or more negative electrode active materials in combination. Examples of the carbonaceous materials include graphite, graphitizable carbon (soft carbon), and non-graphitizable graphite carbon (hard carbon).

The conductive agent is a carbon material, for example. Examples of the carbon material include carbon black, acetylene black, Ketjen black, carbon nanotubes, and graphite.

Examples of the binder include fluorocarbon resins, polyacrylonitriles, polyimide resins, acrylic resins, polyolefin resins, and rubbery polymers. Examples of the fluorocarbon resins include polytetrafluoroethylene and polyvinylidene fluoride.

### [Positive Electrode]

The positive electrode includes a positive electrode current collector and a positive electrode mixture layer supported on the positive electrode current collector, for example. The positive electrode mixture layer contains a positive electrode active material, a conductive material, and a binder, for example. The positive electrode mixture layer may be formed on only one side or both sides of the positive electrode current collector. The positive electrode is obtained, for example, by applying to both sides of a positive electrode current collector a positive electrode mixture slurry containing a positive electrode active material, a conductive material, and a binder, drying the applied film, and then performing rolling. As the positive electrode active material, the binder, the conductive agent, and the like, known materials can be used.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, a lithium-containing transition metal oxide is preferable due to its inexpensive production cost and high average discharge voltage.

The lithium-containing transition metal oxides are composite oxides containing lithium and a metal Me other than lithium, wherein the metal Me includes at least a transition metal. Among the lithium-containing transition metal oxides, a composite oxide having a rock salt type (layered rock salt type) crystalline structure having a layered structure is preferable from the viewpoint of obtaining a high capacity.

The metal Me can include, for example, Sc, Ti, V, Cr, Mn, Fe, Co, Ni, Cu, Y, Zr, or W as a transition metal element. The lithium-containing transition metal oxide may contain one transition metal element or two or more transition metal elements. The metal Me preferably includes at least one selected from the group consisting of Co, Ni, and Mn as the transition metal element, and preferably includes at least Ni as the transition metal. Its crystalline form may be a single crystal, a polycrystal (multi-crystal), or both.

The lithium-containing transition metal oxide can contain one or more typical elements as necessary. Examples of the typical elements include Mg, Al, Ca, Zn, Ga, Ge, Sn, Sb, Pb, and Bi. The one typical element may be Al, for example. That is, the metal Me may include Al as an optional component.

The lithium-containing transition metal oxide is represented, for example, by general formula (1): LiₐNisM_{1-b}O₂. In general formula (1), 0.9 ≤ a ≤ 1.2 and 0.65 ≤ b ≤ 1 are satisfied, and M is at least one element selected from the group consisting of Co, Mn, Al, Ti, Fe, Nb, B, Mg, Ca, Sr, Zr and W.

The molar ratio: mLi/mMe of a total amount mLi of Li contained in the positive electrode and the negative electrode to an amount mMe of the metal Me contained in the lithium-containing transition metal oxide is, for example, 1.2 or less, and may be 1.1 or less.

For the positive electrode current collector, a foil-shaped or sheet-shaped metal material containing, for example, Al, Ti, or Fe can be used. The metal material may be Al, an Al alloy, Ti, a Ti alloy, or an Fe alloy (e.g., stainless steel (SUS)). From the viewpoint of suppressing breakage of the positive electrode during charging and discharging, a resin sheet with a base metal layer may be used as the positive electrode current collector. For the positive electrode, the base metal layer preferably contains aluminum or stainless steel, for example.

The thickness of the positive electrode current collector is not particularly limited but is 5 µm or more and 300 µm or less, for example.

### [Separator]

As the separator, a porous sheet having ionic permeability and insulating properties is used. Examples of the porous sheet include thin films having micropores, woven fabrics, and nonwoven fabrics. The material of the separator is not particularly limited but may be a polymer material. Examples of the polymer material include olefin resins, polyamide resins, and celluloses. Examples of the olefin resins include polyethylene, polypropylene, and copolymers of ethylene and propylene. The separator may contain an additive, as necessary. Examples of the additive include inorganic fillers.

The thickness of the separator is not particularly limited, but is, for example, 5 µm or more and 80 µm or less, and more preferably 10 µm or more and 50 µm or less.

### [Nonaqueous Electrolyte]

The nonaqueous electrolyte has ionic conductivity (e.g., lithium-ion ionic conductivity). The nonaqueous electrolyte having lithium-ion ionic conductivity contains a nonaqueous solvent and lithium ions and anions dissolved in the nonaqueous solvent, for example. The nonaqueous electrolyte may be in a liquid state or a gel state. A liquid nonaqueous electrolyte is prepared by dissolving a lithium salt in a nonaqueous solvent. The lithium salt dissolves in the nonaqueous solvent to produce lithium ions and anions.

As the lithium salt or the anions, a known material used for the nonaqueous electrolytes of lithium secondary batteries can be used. Specific examples thereof include BF₄⁻, ClO₄⁻, PF₆⁻, CF₃SO₃⁻, CF₃CO₂⁻, anions of imides, and anions of oxalate complexes. Examples of the anions of imides include N(SO₂CF₃)₂⁻ and N(S₂CₘF₂ₘ₊₁)ₓ(SO₂CₙF₂ₙ₊₁)_{y}⁻ (m and n represent each independently an integer of 0 or 1 or more, x and y represent each independently 0, 1 or 2, and x + y = 2 is satisfied). The anions of an oxalate complex may contain either or both boron and phosphorus. The nonaqueous electrolyte may contain one type of these anions alone or two or more types of these.

From the viewpoint of suppressing the dendric deposition of the lithium metal, the nonaqueous electrolyte preferably contains at least anions of an oxalate complex, and more preferably contains oxalate complex anions having fluorine. Due to the interaction between lithium and oxalate complex anions having fluorine, the lithium metal is likely to deposit uniformly in the form of fine particles. Accordingly, local deposition of the lithium metal is likely to be suppressed. The oxalate complex anions having fluorine may be combined with other anions. The other anions may be either or both PF₆⁻ and anions of an imide. Examples of the oxalate complex anions include bisoxalate borate anions, difluorooxalate borate anions (BF₂(C₂O₄)⁻), PF₄(C₂O₄)⁻, and PF₂(C₂O₄)₂⁻, and it is desirable to use at least difluorooxalate borate anions.

Examples of the nonaqueous solvent include esters, ethers, nitrites, amides, and halogen-substituted products of these. The nonaqueous electrolyte may contain one of these nonaqueous solvents alone or may contain two or more of these. Examples of the halogen-substituted products include fluorides.

Examples of the esters include carbonic acid esters and carboxylic acid esters. Examples of cyclic carbonic acid esters include ethylene carbonate, propylene carbonate, and fluoroethylene carbonate (FEC). Examples of chain carbonic acid esters include dimethyl carbonate (DMC), ethyl methyl carbonate (EMC), and diethyl carbonate. Examples of cyclic carboxylic acid ester include γ-butyrolactone and γ-valerolactone. Examples of chain carboxylic acids include ethyl acetate, methyl propionate, and methyl fluoropropionate.

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is 0.5 mol/L or more and 3.5 mol/L or less, for example. The concentration of the anions in the nonaqueous electrolyte may be 0.5 mol/L or more and 3.5 mol/L or less. The concentration of the oxalate complex anions in the nonaqueous electrolyte may be 0.05 mol/L or more and 1 mol/L or less.

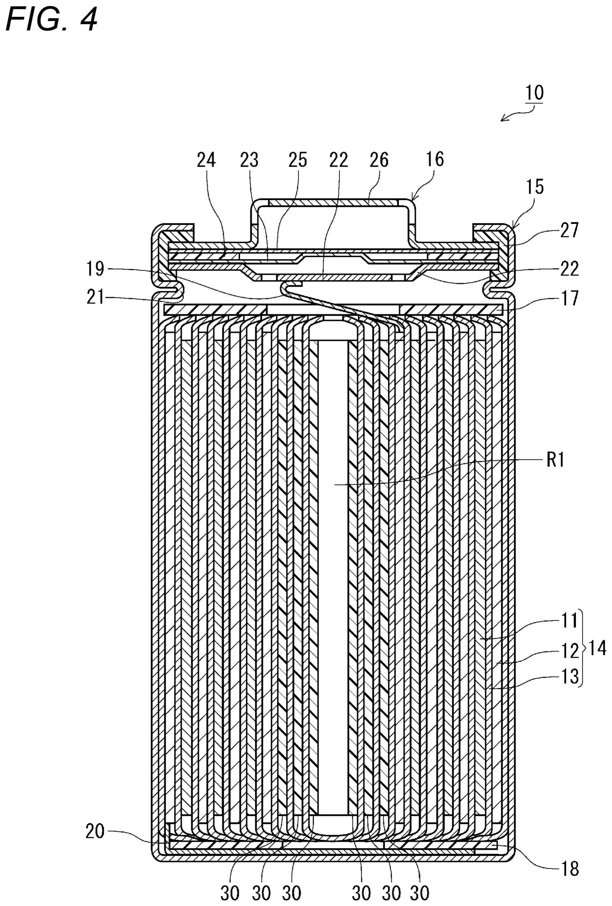

FIG. 4 is a schematic longitudinal cross-sectional view, parallel to the winding axis, of a nonaqueous electrolyte secondary battery according to an embodiment of the present disclosure.

A battery 10 includes a cylindrical battery case and an electrode group 14 of wound type and a non-illustrated nonaqueous electrolyte housed in the battery case. The battery case includes a bottomed cylindrical battery can 15 and a sealing body 16 that seals the opening of the battery can 15. The battery can 15 has an annular step 21 formed by pressing a part of the side wall near the opening from the outside. The sealing body 16 is supported by the surface of the step 21 on the opening side. Between the battery can 15 and the sealing body 16, a gasket 27 is provided to ensure the sealing property of the battery can. Insulating plates 17 and 18 are provided at respective ends of the electrode group 14 in the winding-axis direction inside the battery can 15.

The sealing body 16 includes a filter 22, a lower valve body 23, an insulating member 24, an upper valve body 25, and a cap 26. The cap 26 is provided outside the battery can 15, and the filter 22 is provided inside the battery can 15. The lower valve body 23 and the upper valve body 25 are connected to each other at their central parts, and an insulating member 24 is provided between the peripheral portions of these. The filter 22 and the lower valve body 23 are connected to each other at their peripheral parts. The upper valve body 25 and the cap 26 are connected to each other at their peripheral parts. A vent hole is formed in the lower valve body 23. Upon an increase in the internal pressure of the battery can due to, for example, abnormal heat generation, the upper valve body 25 bulges toward the cap 26 and separates from the lower valve body 23. As a result, electrical connection between the lower valve body 23 and the upper valve body 25 is cut off. When the internal pressure is further increased, the upper valve body 25 is broken to release the gas from the opening formed in the cap 26.

The electrode group 14 includes a core portion (B) 14c formed of the film piece 30 and the winding start end region of the separator 13, and further includes a positive electrode 11, a negative electrode 12, and a separator 13, which are sequentially wound around the core portion (B) 14c. The positive electrode 11, the negative electrode 12, and the separator 13 provided therebetween each have an elongated sheet shape (or a band shape) and are wound such that the width directions of these are parallel to the winding axis. The film piece 30 is located only in the core portion (B) 14c.

The positive electrode 11 is electrically connected to the cap 26, which also serves as a positive electrode terminal, via a positive electrode lead 19. One end of the positive electrode lead 19 is connected, for example, near the longitudinal center of the positive electrode 11. The other end of the positive electrode lead 19 extending out of the positive electrode 11 is welded to the inner surface of the filter 22 through a through hole formed in the insulating plate 17.

The negative electrode 12 is electrically connected to the battery can 15, which also serves as a negative electrode terminal, via a negative electrode lead 20. One end of the negative electrode lead 20 is connected, for example, to the end of the negative electrode 12 in the longitudinal direction. The other end thereof is welded to the inner bottom surface of the battery can 15.

In the illustrated embodiment, a cylindrical nonaqueous electrolyte secondary battery including an electrode group of wound type has been described. However, for example, the shape of the lithium secondary battery is not limited thereto, may be prismatic, and can be appropriately selected from various shapes according to the application and the like. Further, known configurations other than those described above can be used without any particular limitations.

### <<Supplemental Remarks>>

According to the above description of the embodiments, the following techniques are disclosed.

### (Technique 1)

A nonaqueous electrolyte secondary battery including:
an electrode group of wound type including a positive electrode, a negative electrode, and a separator provided between the positive electrode and the negative electrode; and
a nonaqueous electrolyte,
wherein the electrode group includes a core portion for winding,
the core portion includes a film piece and a winding start end region of the separator,
the film piece and the winding start end region are wound in an overlapped manner, and
an innermost peripheral part of the core portion is closed by a folded portion formed of the film piece and the winding start end region, overlapped with each other, folded in two.

### (Technique 2)

The nonaqueous electrolyte secondary battery according to Technique 1, wherein in the folded portion, the film piece is wrapped with the winding start end region.

### (Technique 3)

The nonaqueous electrolyte secondary battery according to Technique 1 or 2, wherein in the folded portion, the winding start end region is wrapped with the film piece.

### (Technique 4)

The nonaqueous electrolyte secondary battery according to any one of Techniques 1 to 3, wherein the electrode group has a first space inside the innermost peripheral part of the core portion, and a second space adjacent to the first space with parts of the film piece and the winding start end region therebetween,
one of the first space and the second space is surrounded by the film piece, and
another of the first space and the second space is surrounded by the winding start end region.

### (Technique 5)

The nonaqueous electrolyte secondary battery according to any one of Techniques 1 to 4, wherein the film piece which forms two overlapping layers is wound together with the winding start end region one turn or more and ten turns or less.

### (Technique 6)

The nonaqueous electrolyte secondary battery according to any one of Techniques 1 to 5, wherein the film piece is a resin film.

### (Technique 7)

The nonaqueous electrolyte secondary battery according to Technique 6, wherein a thickness of the resin film is 0.005 mm or more and 0.1 mm or less.

### (Technique 8)

The nonaqueous electrolyte secondary battery according to any one of Techniques 1 to 7, wherein a largest diameter of the core portion is 0.5 mm or more and 6 mm or less.

### (Technique 9)

The nonaqueous electrolyte secondary battery according to any one of Techniques 1 to 8, wherein a tensile strength of the film piece in an MD direction is 10 MPa or more and 400 MPa or less.

### (Technique 10)

The nonaqueous electrolyte secondary battery according to any one of Techniques 1 to 9, wherein an elongation of the film piece is 30% or more.

### (Technique 11)

The nonaqueous electrolyte secondary battery according to any one of Techniques 1 to 10, wherein in the negative electrode, lithium metal deposits during charging, and the lithium metal dissolves during discharging.

### (Technique 12)

The nonaqueous electrolyte secondary battery according to any one of Techniques 1 to 11, wherein the negative electrode includes a negative electrode current collector carrying the lithium metal that deposits during charging, and
the negative electrode current collector includes a stainless steel foil, an oxygen-free copper foil, or a resin film.

### [Examples]

Hereinafter, the nonaqueous electrolyte secondary battery according to the present disclosure will be described further in detail based on examples and comparative examples. However, the present disclosure is not limited to the following examples.

### [Example 1]

### (Positive Electrode Production)

A positive electrode mixture slurry was prepared by adding 2.5 parts by mass of acetylene black and 2.5 parts by mass of polyvinylidene fluoride to 95 parts by mass of a positive electrode active material and further adding an appropriate amount of N-methyl-2-pyrrolidone, followed by stirring. As the positive electrode active material, a lithium-containing transition metal oxide of rock salt type having a layered structure was used that contained Li, Ni, Co, and Al (molar ratio of Li to the total of Ni, Co and Al was 1.0).

The positive electrode mixture slurry was applied to both surfaces of a band-shaped Al foil (positive electrode current collector) having a thickness of 14 µm, and the resulting coated film was dried and rolled to obtain a laminate in which a positive electrode mixture layer was formed on both surfaces of the positive electrode current collector. The laminate was cut to a predetermined electrode size to obtain a band-shaped positive electrode 11. A positive electrode lead 19 made of Al was attached to a predetermined position of the positive electrode 11.

### (Negative Electrode Preparation)

Lithium silicate (Li₂O·2.1SiO₂) having an average particle diameter of 10 µm and silicone (3N, average particle diameter 10 µm) as a raw material were mixed in a mass ratio of 50:50. The mixture was charged into a pot of a planetary ball mill. The pot was filled with SUS balls (diameter 20 mm), and capped. The mixture was pulverized at 200 rpm in an inert atmosphere for 50 hours. The resulting powdery mixture was then taken out in an inert atmosphere and sintered at 600°C in an inert atmosphere for 4 hours to obtain a sintered body (Si-containing material) of the mixture. Thereafter, the Si-containing material was pulverized, allowed to pass through a 40-µm mesh, and mixed with coal pitch. The resulting mixture was sintered at 800°C in an inert atmosphere for 5 hours. Then, the surface of the Si-containing material was coated with a conductive carbon. The content of the conductive carbon was set to 5% by mass. A sieve was then used to obtain an Si-containing material having an average particle diameter of 10 µm and including conductive layers.

The Si-containing material with conductive layers and graphite were mixed in a mass ratio of 5:95 for use as a negative electrode active material. The negative electrode active material, sodium carboxymethylcellulose (CMC-Na), and styrene-butadiene rubber (SBR) were mixed in a mass ratio of 97.5:1:1.5, and water was added to the resulting mixture. Then, the mixture was stirred using a mixer to prepare a negative electrode slurry.

The negative electrode mixture slurry was applied to both surfaces of a band-shaped electrolytic copper foil (negative electrode current collector) having a thickness of 12 µm, and the resulting coated film was dried and rolled to obtain a laminate in which a negative electrode mixture layer was formed on both surfaces of the negative electrode current collector. The laminate was cut to a predetermined electrode size to obtain a band-shaped negative electrode 12. A negative electrode lead 20 made of Ni was attached at a predetermined position of the negative electrode 12.

### (Separator Preparation)

A polyethylene-made separator (microporous film) having a thickness of 20 µm was prepared.

### (Film Piece Preparation)

A stainless steel foil (SUS304) having a thickness of 0.12 mm was prepared. The stainless steel foil had a tensile strength of 650 MPa and an elongation of 5%.

### (Preparation of Nonaqueous Electrolyte A)

A nonaqueous electrolyte A was prepared by dissolving LiPF₆ at a concentration of 1.0 mol/L in a mixed solvent of ethylene carbonate (EC) and diethyl carbonate (DEC) in a volume ratio of 3:7.

### (Battery Assembly)

An electrode group was formed in an inert atmosphere using a pair of rod-shaped bodies as a winding core. The cross-section perpendicular to the length direction of each rod-shaped body was generally semicircular. The separator and the film piece were wound around the peripheral surface of one of the rod-shaped bodies in such a manner that the separator was on the inside and the film piece was on the outside. The winding start end region of the separator and the film piece were both sandwiched between the paired rod-shaped bodies and wound to form a core portion (B). The length of the film piece was determined such that the largest diameter of the core portion (B) was 7 mm. Thereafter, the negative electrode and the positive electrode were sequentially wound with the two-layer separator led out of the core portion (B) so as to be enclosed therein. The separator, the positive electrode, and the negative electrode were then wound to form an electrode group. After the winding was completed, the winding core was pulled out.

A bag-shaped outer package formed of a laminated sheet including an Al layer was prepared. The electrode group was housed in the outer package. The nonaqueous electrolyte was injected thereinto. Then, the outer package was sealed to produce a battery A1.

### <<Example 2>>

A battery A2 was produced in the same manner as the battery A1, except that the core portion (B) was formed by winding the film piece and the separator around the peripheral surface of the rod-shaped body in such a manner that the film piece was on the inside and the separator was on the outside in the electrode group formation.

### <<Example 3>>

A battery A3 was produced in the same manner as the battery A2, except that an electrolytic copper foil (negative electrode current collector) not including a negative electrode mixture layer was used as the negative electrode, and the nonaqueous electrolyte A was changed to a nonaqueous electrolyte B. The nonaqueous electrolyte B was prepared by dissolving LiPF₆ and LiBF₂(C₂O₄) in a mixed solvent of 1,2-dimethoxyethane and 1,1,2,2-tetrafluoroethyl-2,2,2-trifluoroethyl ether. In the nonaqueous electrolyte, the concentration of LiPF₆ was set to 1 mol/L, and the concentration of LiBF₂(C₂O₄) was set to 0.1 mol/L.

### <<Example 4>>

In a dry atmosphere with a dew point of -30°C or lower, a lithium metal foil (thickness 30 µm) was pressed onto both surfaces of the negative electrode current collector to form negative electrode including lithium metal layers (lithium underlayers). A battery A4 was produced in the same manner as the battery A2, except that the above negative electrode was used, and the nonaqueous electrolyte A was changed to the nonaqueous electrolyte B.

### <<Example 5>>

A battery A5 was produced in the same manner as the battery A4, except that a polyethylene terephthalate (PET) film having a thickness of 0.05 mm was used as the film piece.

### <<Examples 6>>

A battery A6 was produced in the same manner as the battery A4, except that a polypropylene (PP) film having a thickness of 0.05 mm was used as the film piece.

### <<Examples 7>>

A battery A7 was produced in the same manner as the battery A4, except that a polyimide (PI) film having a thickness of 0.038 mm was used as the film piece.

### <<Examples 8>>

A battery A8 was produced in the same manner as the battery A4, except that a PET film having a thickness of 0.038 mm was used as the film piece, and the largest diameter of the core portion (B) was changed to 3 mm.

### <<Examples 9>>

A battery A9 was produced in the same manner as the battery A4, except that a PET film having a thickness 0.02 mm was used as the film piece, the largest diameter of the core portion (B) was changed to 3 mm, and the negative electrode current collector was changed to an oxygen-free copper foil. As the oxygen-free copper foil, a foil of C1020 copper specified in JIS H 3100 was used.

### <<Examples 10>>

A battery A10 was produced in the same manner as the battery A4, except that a PET film having a thickness of 0.02 mm was used as the film piece, the largest diameter of the core portion (B) was changed to 3 mm, and the negative electrode current collector was changed to a stainless steel foil. An austenitic stainless steel foil (SUS316L) was used as the stainless steel foil.

### <<Examples 11>>

A battery A11 was produced in the same manner as the battery A4, except that a PET film having a thickness 0.02 mm was used as the film piece, the largest diameter of the core portion (B) was changed to 3 mm, and the negative electrode current collector was changed to a resin sheet with a base metal layer. As the resin sheet with the base metal layer, a sheet (thickness 12 µm) made of PET with a copper base metal layer (thickness 1.0 µm) formed on both surfaces was used.

### <<Examples 12>>

A battery A12 was produced in the same manner as the battery A11, except that the core portion (B) was formed by winding the separator and the film piece around the peripheral surface of the rod-shaped body in such a manner that the separator was on the inside and the film piece was on the outside in the electrode group formation.

### <<Comparative Example 1>>

In the electrode group formation, a core portion having the largest diameter of 7 mm was formed by winding only an identical film piece to the film piece used in the battery A2 around the peripheral surface of a columnar rod-shaped body having a circular cross section, and two layers of the separator were connected to the core portion using tape. Thereafter, the negative electrode and the positive electrode were sequentially wrapped with the separator in two layers connected to the core portion, and then, the separator, the positive electrode, and the negative electrode were wound. Finally, the rod-shaped body was pulled out to form an electrode group. A battery B1 was produced in the same manner as the battery A2, except that the electrode group as obtained above was used.

### <<Comparative Example 2>>

In the electrode group formation, a core portion having a largest diameter of 3 mm was formed by winding only an identical film piece to the film piece used in the battery A8 around the peripheral surface of a columnar rod-shaped body having a circular cross section, and the separator in two layers were connected to the core portion using tape. Thereafter, the negative electrode and the positive electrode were sequentially wrapped with the separator in two layers connected to the core portion, and then, the separator, the positive electrode, and the negative electrode were wound. Finally, the rod-shaped body was pulled out, thereby forming an electrode group. A battery B2 was produced in the same manner as the battery A8, except that the electrode group obtained above was used.

### <<Comparative Example 3>>

A battery B3 was produced in the same manner as the battery B2, except that an identical negative electrode to the negative electrode used in the battery A10 was used in the electrode group formation.

The main characteristics of the batteries thus obtained are shown in Table 1. Table 1 shows the tensile strength and the elongation of the film piece used in each of the batteries.

**[Table 1]**

| | Core portion | | | | | | Negative electrode active material | Negative electrode current collector | Evaluation |
|---|---|---|---|---|---|---|---|---|---|
| | Folded portion | Largest diameter (mm) | Film piece | | | | | | Cycle number index |
| | | | Thickness (mm) | Material | Tensile strength (MPa) | Elongation (%) | | | |
| A1 | Film piece wraps separator | 7 | 0.12 | SUS304 | 650 | 5 | Graphite + Si | Electrolytic copper foil | 100 |
| A2 | Separator wraps film piece | 7 | 0.12 | SUS304 | 650 | 5 | Graphite + Si | Electrolytic copper foil | 102 |
| A3 | Separator wraps film piece | 7 | 0.12 | SUS304 | 650 | 5 | Abcent | Electrolytic copper foil | 102 |
| A4 | Separator wraps film piece | 7 | 0.12 | SUS304 | 650 | 5 | Li | Electrolytic copper foil | 103 |
| A5 | Separator wraps film piece | 7 | 0.05 | PET | 200 | 150 | Li | Electrolytic copper foil | 105 |
| A6 | Separator wraps film piece | 7 | 0.05 | PP | 140 | 120 | Li | Electrolytic copper foil | 104 |
| A7 | Separator wraps film piece | 7 | 0.038 | PI | 300 | 80 | Li | Electrolytic copper foil | 104 |
| A8 | Separator wraps film piece | 3 | 0.038 | PET | 200 | 150 | Li | Electrolytic copper foil | 110 |
| A9 | Separator wraps film piece | 3 | 0.02 | PET | 200 | 150 | Li | Oxygen-free copper foil | 115 |
| A10 | Separator wraps film piece | 3 | 0.02 | PET | 200 | 150 | Li | Stainless steel foil | 117 |
| A11 | Separator wraps film piece | 3 | 0.02 | PET | 200 | 150 | Li | Resin sheet | 115 |
| A12 | Film piece wraps separator | 3 | 0.02 | PET | 200 | 150 | Li | Resin sheet | 113 |
| B1 | - | 7 | 0.12 | SUS304 | 650 | 5 | Graphite + Si | Electrolytic copper foil | 85 |
| B2 | - | 3 | 0.038 | PET | 200 | 150 | Li | Electrolytic copper foil | 70 |
| B3 | - | 3 | 0.038 | PET | 200 | 150 | Li | Stainless steel foil | 69 |

### [Evaluation: Number of Cycles]

With respect to each of the batteries, a charge and discharge test was performed in a thermostatic bath at 25°C under the following conditions. The pause time between the charge and the discharge was set to 20 minutes.

### (Charge)

Constant current charge was performed at a current of 2.15 mA per electrode unit area (square centimeter) until the battery voltage reached 4.1 V, and then constant voltage charge was performed at a voltage of 4.1 V until the current per unit area of the electrode reached 0.54 mA.

### (Discharge)

Constant current discharge was performed at a current of 2.15 mA per electrode unit area until the battery voltage reached 3.75 V.

The charge and the discharge were repeated as one cycle. The numbers of cycles of the other batteries are shown in Table 1, given that 100 is the number of cycles until the discharge capacity of the battery of Example 1 decreases to 80% of its initial discharge capacity.

In each of the batteries A1 to A12, the number of cycles was significantly large as compared with the batteries B1 to B3. It is considered that this is because the core portion contracted during charging and discharging to relieve the increase in contact pressure of the electrode group in the batteries A1 to A12. It is considered that although the core portion also contracted during charging and discharging even in the batteries B1 to B3, smooth inward deformation was not achieved and nonuniform deformation of the core portion was caused, due to a difference in the degree of slipperiness between the film and the separator, which caused breakage of the electrode group and, as a result, led to deterioration of their cycle characteristics.

### [Industrial Applicability]

The nonaqueous electrolyte secondary battery of the present disclosure can be used in electric vehicles, hybrid vehicles, plug-in hybrid vehicles, household storage batteries, and electronic devices such as mobile phones, smartphones, and tablet terminals, for example.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

9a, 9b: winding core (rod-shaped body), 10: nonaqueous electrolyte secondary battery, 11: positive electrode, 12: negative electrode, 13: separator, 14: electrode group, 14c: core portion, 15: battery can, 16: sealing body, 17,18: insulating plate, 19: positive electrode lead, 20: negative electrode lead, 21: step, 22: filter, 23: lower valve body, 24: insulating member, 25: upper valve body, 26: cap, 27: gasket, 30: film piece

## Claims

1. A nonaqueous electrolyte secondary battery comprising:
an electrode group of wound type including a positive electrode, a negative electrode, and a separator provided between the positive electrode and the negative electrode; and
a nonaqueous electrolyte,
wherein the electrode group includes a core portion for winding,
the core portion includes a film piece and a winding start end region of the separator,
the film piece and the winding start end region are wound in an overlapped manner, and
an innermost peripheral part of the core portion is closed by a folded portion formed of the film piece and the winding start end region, overlapped with each other, folded in two.

2. The nonaqueous electrolyte secondary battery according to claim 1,
wherein in the folded portion, the film piece is wrapped with the winding start end region.

3. The nonaqueous electrolyte secondary battery according to claim 1,
wherein in the folded portion, the winding start end region is wrapped with the film piece.

4. The nonaqueous electrolyte secondary battery according to claim 1,
wherein the electrode group has a first space inside the innermost peripheral part of the core portion, and a second space adjacent to the first space with parts of the film piece and the winding start end region therebetween,
one of the first space and the second space is surrounded by the film piece, and
another of the first space and the second space is surrounded by the winding start end region.

5. The nonaqueous electrolyte secondary battery according to claim 1,
wherein the film piece which forms two overlapping layers is wound together with the winding start end region one turn or more and ten turns or less.

6. The nonaqueous electrolyte secondary battery according to claim 1,
wherein the film piece is a resin film.

7. The nonaqueous electrolyte secondary battery of claim 6,
wherein a thickness of the resin film is 0.005 mm or more and 0.1 mm or less.

8. The nonaqueous electrolyte secondary battery according to claim 1,
wherein a largest diameter of the core portion is 0.5 mm or more and 6 mm or less.

9. The nonaqueous electrolyte secondary battery according to claim 1,
wherein a tensile strength of the film piece in an MD direction is 10 MPa or more and 400 MPa or less.

10. The nonaqueous electrolyte secondary battery according to claim 1,
wherein an elongation of the film piece is 30% or more.

11. The nonaqueous electrolyte secondary battery according to claim 1,
wherein in the negative electrode, lithium metal deposits during charging, and the lithium metal dissolves during discharging.

12. The nonaqueous electrolyte secondary battery according to claim 1,
wherein the negative electrode includes a negative electrode current collector carrying the lithium metal that deposits during charging, and
the negative electrode current collector includes a stainless steel foil, an oxygen-free copper foil, or a resin film.
